# EUROPEAN PATENT SPECIFICATION

(11) **EP 1 890 861 B1**
(45) Date of publication and mention of the grant of the patent: **30.03.2016**
(21) Application number: 05773294.3
(22) Date of filing: 01.06.2005
(51) Int. Cl.: B29C 55/14, B29C 55/06, B29C 47/92

(54) **METHOD OF CONTROLLING CROSS-WEB CALIPER PROFILE OF BIAXIALLY ORIENTED POLYMERIC FILMS**
VERFAHREN ZUR STEUERUNG DES QUERBAHNSTÄRKENPROFILS BIAXIAL ORIENTIERTER POLYMERFOLIEN
PROCEDE PERMETTANT DE MODULER LE PROFIL D'EPAISSEUR TRANSVERSAL DES FILMS POLYMERES A ORIENTATION BIAXIALE

(43) Date of publication of application: 27.02.2008
(73) Proprietor: 3M Innovative Properties Company, St. Paul, MN 55133-3427 (US)
(72) Inventor: KARG, Donovan C. Jr., Saint Paul, Minnesota 55133-3427 (US); WONG, Chiu Ping, Saint Paul, Minnesota 55133-3427 (US)
(74) Representative: Vossius & Partner Patentanwälte Rechtsanwälte mbB
(86) International application number: PCT/US2005/019122
(87) International publication number: WO 2006/130141

(56) References cited:
- DE-A1- 2 542 507
- US-A- 3 161 711
- US-A- 3 782 873

## Description

### Field of the Invention

The present application relates to controlling caliper variations in extruded, oriented films.

### Background

Extrusion of film typically gives rise to thickness variations along the length and width of the film. Prior art methods of controlling thickness variations include adjusting die bolts (US 4,409,160, Kogo et al.), adjusting the heating power of stationary heaters during stretching (US 3,347,960, Fenley; JP 52,047,070, Tsutsui), or intentionally producing thick and thin areas at changing locations across the web (GB 1,437,979, Hoechst Aktiengesellschaft; GB 1,437,980, Hoechst Aktiengesellschaft), so that the roll of finished film is uniform in appearance. US 3,161,711 discloses a process for improving thickness uniformity of thermoplastic polymer films by supplying heat before stretching.

### Summary

The present invention relates to a method of controlling a cross-web caliper profile of a biaxially oriented polymeric film according to claim 1. The above summary is not intended to describe each disclosed embodiment or every implementation of the present invention. The Figures and the detailed description below more particularly exemplify illustrative embodiments.

### Brief Description of the Drawings

The invention may be more completely understood in consideration of the following detailed description in connection with the accompanying drawings, where like reference numerals designate like elements. The appended drawings are intended to be illustrative examples and are not intended to be limiting.
FIG. 1 is a schematic diagram of a film line for biaxially oriented film.
FIG. 2a is a schematic diagram of one embodiment of an adjustable profile cross-web heat distribution system in a length orienter.
FIG. 2b is a schematic diagram of another embodiment of an adjustable profile cross-web heat distribution system in a length orienter.
FIG. 2c is a schematic diagram of another embodiment of an adjustable profile cross-web heat distribution system in a length orienter.
FIG. 3 is a schematic top view of one embodiment of a channel blocker assembly. FIG. 4 is a schematic diagram of another embodiment of an adjustable cross-web heat distribution system.
FIG. 5 is a schematic diagram of an exemplary repositionable, pivoting heating element of one embodiment.
FIG. 6 is a partial perspective view of an assembly of repositionable, pivoting heating elements of one embodiment.
FIG. 7 shows the effect of specific channel blockers on optical caliper in Example 1.
FIG. 8 shows the effect of a set of channel blockers on optical caliper in Example 2.
FIG. 9 shows change in optical caliper profile with cross-web location in Example 3.
FIG. 10 shows relative optical thickness versus cross-web location corresponding to configurations of heating element settings in Table 4 of Example 4.
FIG. 11 shows relative optical thickness versus cross-web location corresponding to configurations of heating element settings in Table 5 of Example 4.
FIG. 12 shows relative optical thickness versus cross-web location corresponding to configurations of heating element settings in Table 6 of Example 4.
FIG. 13 shows relative optical thickness versus cross-web location corresponding to configurations of heating element settings in Table 7 of Example 4.

### Detailed Description

The present application relates to controlling thickness variations in oriented films. Manufacturing of film typically gives rise to thickness variations along the length and width of the film. This application discloses new systems and methods for finely and actively adjusting the cross-web caliper profile of oriented films.

The disclosed systems and methods may be used in the manufacture of films comprising any polymers whose properties can benefit from stretching during film manufacture. Films may comprise one or more than one polymer. Films having more than one constituent polymer may have any morphological or structural form, including, but not limited to, miscible blends, immiscible blends in which one polymer is a continuous phase and one or more are dispersed phases, co-continuous blends, interpenetrating polymer networks, and layered films having any number of layers. The presently disclosed systems and methods are particularly useful for multilayer optical films. These systems and methods are also particularly useful for films comprising a polyester.

Multilayer optical films made by employing the disclosed system or methods may include, but are not limited to, mirror films, polarizing films such as reflective polarizers, display films, optical filters, compensating films, anti-reflection films, or window (energy control or solar control) films (for architectural, automotive, greenhouse, or other uses) that provide, for example, UV- or IR-screening, tinting, or shading.

Films made by employing the present systems or methods need not be multilayer optical films. Other high performance films can also benefit from the cross-web caliper control disclosed herein. High performance film applications include, but are not limited to, magnetic media base films for analog or digital recording of audio, video, or data, graphic arts films, reprographic films, overhead transparency films, photographic films, x-ray films, microfilms, photo print films, inkjet printing films, plain paper copier films, printing plate films, color proofing films, digital printing films, carbon ribbon films, flexographic printing films, gravure printing films, drafting and diazo printing films, holographic films, adhesive tape substrates, abrasives substrates, label films, release liner films, masking films, laminating films, packaging films, heat-seal films, lidding films, dual-ovenable films, barrier films, stamping foils, metallizing films, decorative films, archival and conservation films, electrical insulating films for wire and cable, motors, transformers, and generators, flexible printed circuit films, capacitor films, films for cards such as credit cards, prepaid cards, ID cards, and "smart cards", window- or safety-films (security films) for scratch resistance, anti-graffiti, or shatter protection, membrane switch films, touch screen films, medical sensor and diagnostic device films, acoustic insulation films, acoustical speaker films, and drumhead films.

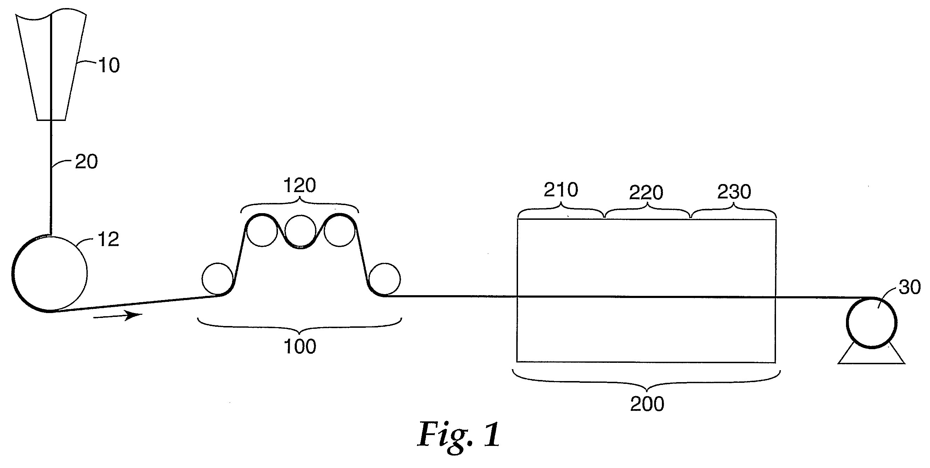

To impart particular optical and/or physical characteristics to the finished film, polymer can be extruded through a film die, the orifice of which is usually controlled by a series of die bolts. Extruded films can subsequently be oriented, for example by stretching, at ratios determined by the desired properties. Longitudinal stretching can be done by pull rolls in a length orienter 100, as shown in Figure 1. The length orienter typically has one or more longitudinal stretch zones. Transverse stretching can be done in a tenter oven 200 shown in Figure 1. The tenter oven usually contains at least a preheat zone 210 and a transverse stretch zone 220. Often the tenter oven also contains a heat set zone 230, as shown in Figure 1. Systems can be designed to contain one or more of any or all of these zones. If desired, the film can be biaxially oriented. Biaxial stretching can be done sequentially or simultaneously. Films can also be made by longitudinal stretching alone, or by transverse stretching alone. For uniaxial stretching, stretch ratios of approximately 3:1 to 10:1 are common. For biaxial stretching, the product of the longitudinal and transverse stretch ratios is usually in the range of 4:1 to 60:1. Those skilled in the art will understand that other stretch ratios may be used as appropriate for a given film.

For the purpose of this application, the term "transverse stretch zone" refers to either a purely transverse stretch zone or a simultaneous biaxial stretch zone in a tenter oven. By "tenter", we mean any device by which film is gripped at its edges while being conveyed in the machine direction. Typically, film is stretched in the tenter. In general, the stretching direction in the tenter will be perpendicular to the machine direction (the transverse direction or cross-direction), but other stretching directions, for example at angles other than the angle perpendicular to film travel, are also contemplated. Optionally, in addition to stretching the film in a first direction that is other than the machine direction, the tenter may also be capable of stretching the film in a second direction, either the machine direction or a direction that is close to the machine direction. Second direction stretching in the tenter may occur either simultaneously with the first direction stretching, or it may occur separately, or both. Stretching within the tenter may be done in any number of steps, each of which may have a component of stretching in the first direction, in the second direction, or in both. A tenter can also be used to allow a controlled amount of transverse direction relaxation in a film that would shrink if not gripped at its edges. In this case, relaxation takes place in a relaxation zone.

A common industrially useful tenter grips the two edges of the film with two sets of tenter clips. Each set of tenter clips is driven by a chain, and the clips ride on two rails whose positions can be adjusted in such a way that the rails diverge from one another as one travels through the tenter. This divergence results in a cross-direction stretch. Variations on this general scheme are known, and are contemplated herein.

Some tenters are capable of stretching film in the machine direction, or a direction close to the machine direction, at the same time they stretch the film in the cross-direction. These are often referred to as simultaneous biaxial stretching tenters. One type uses a pantograph or scissors-like mechanism to drive the clips. This makes it possible for the clips on each rail to diverge from their nearest-neighbor clips on that rail as they proceed along the rail. Just as in a conventional tenter, of course, the clips on each rail diverge from their counterparts on the opposite rail due to the divergence of the two rails from one another. Another type of simultaneous biaxial stretching tenter substitutes a screw of varying pitch for each chain. In this scheme, each set of clips is driven along its rail by the motion of the screw thread, and the varying pitch provides for divergence of the clips along the rail. In yet another type of simultaneous biaxial stretching tenter, the clips are individually driven electromagnetically by linear motors, thus permitting divergence of the clips along each rail. A simultaneous biaxial stretching tenter can also be used to stretch in the machine direction only. In this case, machine direction stretching takes place in a machine direction stretch zone. In this application, transverse direction stretching, relaxation, and machine direction stretching are examples of deforming, and transverse stretch zone, relaxation zone, or machine direction stretch zone are examples of deformation zones. Other methods for providing deformation in two directions within a tenter may also be possible, and are contemplated by the present application.

Film processing methods can include extruding polymeric melt through an extruder die 10. The die lip profile is often adjustable with a series of die bolts. For multilayer films, multiple melt streams and multiple extruders are employed. The extrudate is cooled on a rotating casting wheel 12. The film at this point is often referred to as a "cast web". During orientation, the film or cast web is stretched in the machine direction, transverse direction, or both depending on desired properties of the finished film. Film processing details are described, for example in U.S. Patent No. 6,830,713 (Hebrink et al.). For simplicity the present specification shall use the term "film" to denote film at any stage of the process, without regard to distinctions between "extrudate," "cast web" or "finished film." However, those skilled in the art will understand that film at different points in the process can be referred to by the alternate terms listed above, as well as by other terms known in the art.

Throughout the film making process, a number of elements can contribute to variations in film caliper uniformity. For example, uniformity fluctuations can be due to variations in a number of cross-web conditions, including variations in die lip profile, cross-web die temperature, cross-web casting wheel temperature, drafts in ambient air, non-uniform tenter temperatures and/or pressures, and a variety of other factors that will be apparent to those skilled in the art. Film uniformity is important in high quality multilayer films, especially in multilayer optical films. For a growing number of applications it is desirable for these films to exhibit a high degree of physical and optical uniformity over a large area. The systems and methods disclosed in the present application can provide active cross-web control to achieve such film uniformity.

Typical methods for controlling cross-web caliper in film manufacturing involve adjustment of diebolts in the die during the cast-web forming process. These adjustments include changing the physical spacing of the die lips by physically turning the die bolts or changing the diebolt temperature. However the result of diebolt adjustment on film caliper is coarse and slow. Changing the physical spacing of die lips yields a coarse adjustment due to inflexibility of the die lips. In most cases, the effect of adjusting a single diebolt alters the film caliper in up to 7 diebolt-lanes in the finished film. Thus it is difficult to control fine variation in cross-web caliper by adjusting diebolt spacing. Changing the diebolt temperature produces a slow change in caliper adjustment because the diebolt heaters take a significantly long time to warm up and cool down. Additionally, since the path from the die to the winder in a film line is long, the response time in caliper changes from diebolt adjustments is often quite long, making the caliper profile control difficult and slow.

The disclosed systems and methods of controlling the cross-web caliper of extruded film allow for active, fine control of the caliper profile as the film is being made. Cross-web caliper control can be accomplished by monitoring the cross-web caliper profile and controlling the heat distribution profile of the heat delivered to the film during stretching or deforming. Monitoring the cross-web caliper profile can include measuring the physical or optical caliper profile and mapping the measured profile onto the location where the heat distribution control is to take place. Various systems and methods of controlling the cross-web heat distribution in response to the monitored profile will be discussed. The steps of monitoring the caliper and adjusting the heat distribution can form a feedback loop which is used iteratively until a desired final caliper profile is reached in the film. The disclosed systems and methods can also be used in conjunction with diebolt adjustment to provide fine control of cross-web caliper profile.

In some disclosed embodiments, particular techniques for controlling a cross-web caliper profile of a biaxially oriented polymeric film are used. For example, in some cases channel blockers are used to adjust the heat distribution profile, and in some cases repositionable, pivotable heating elements are used to adjust the heat distribution profile. These techniques can be used alone or in combination during deforming, e.g. stretching longitudinally, transversely, biaxially, or during controlled relaxation. For example, channel blockers can be employed in a length orienter for longitudinally stretched films, or in a tenter for transversely or biaxially stretched films. Similarly, the repositionable, pivotable heating elements can be employed in a length orienter or in a tenter. The method of controlling a cross-web caliper profile of a biaxially oriented polymeric film can be used with any of the presently disclosed heat distribution systems as well as with other heating systems known in the art.

The disclosed cross-web heat distribution systems can deliver heat to the film as it is being stretched while providing adjustable position control and adjustable profile control of the heat delivered. This can provide, if desired, much finer control of the cross-web caliper profile than known systems. The disclosed systems can also provide generally faster response times compared to known systems.

A novel method for controlling cross-web caliper profile of a biaxially oriented film is disclosed. This method relies on controlling the heat distribution in or near the stretch zone of the length orienter (LO), subsequently deforming the film in the tenter, measuring the resulting cross-web caliper profile after the deformation zone in the tenter, and adjusting the heat distribution in the LO based on the measured caliper profile. In one embodiment, the deformation zone can be at the end of the line, just before the winder. In another embodiment, the deformation zone can be positioned between other zones, as shown for example in Figure 1. Other embodiments may have additional elements, such as a subsequent second length orienter.

As will be described in more detail below, these systems and methods can be used alone or in combination, and in virtually any film line to produce films with enhanced cross-directional caliper uniformity. These systems and methods can also be used to produce films with tailored cross-web caliper profiles, such as, for example in multilayer optical film applications where color variations are desirable and film thickness variations are intentionally imparted.

Two illustrative embodiments are discussed in detail below. The first embodiment employs channel blockers in a length orienter. The second embodiment employs repositionable, pivoting heaters in a tenter oven.

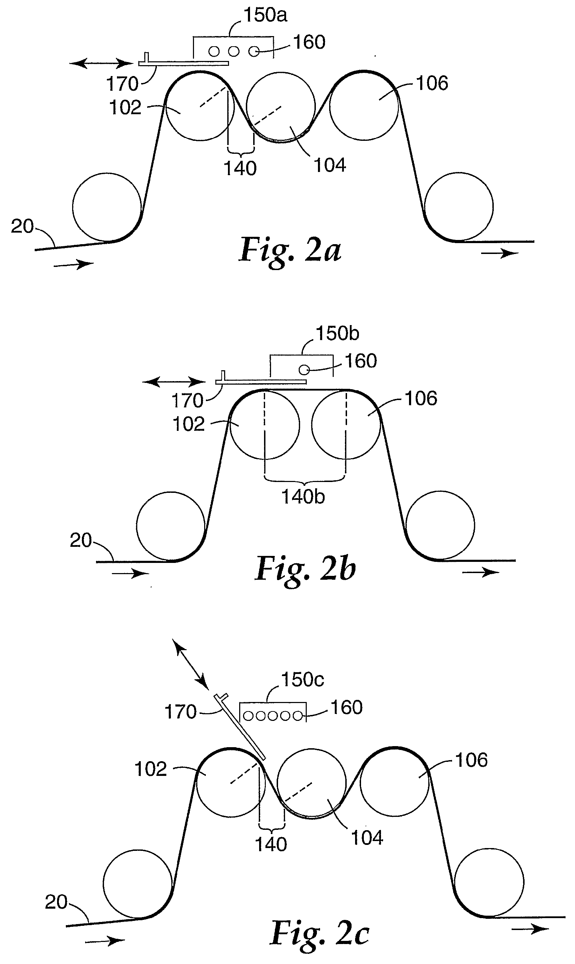

In some embodiments the cross-web heat distribution system comprises at least one transverse heating element in combination with a plurality of channel blockers. Three examples of such a system are shown in Figures 2a-2c. In these Figures, the film is stretched in a length orienter. In Figures 2a and 2c, pull rolls 102, 104, and 106 are set up in an S-wrap configuration. In Figure 2b, the pull rolls are set up in a normal or tabletop configuration. The embodiments depicted in Figures 2a-c employ heating assemblies 150a-c respectively together with a set of channel blockers 170 for providing a selectable distribution of heat to the longitudinal stretch zone 140 or 140b of the film 20.

In Figure 2a, the heating assembly 150a comprises three transverse infrared heating elements 160. The adjustable profile cross-web heat distribution system also comprises a set of channel blockers 170, aligned in the machine direction of the film, positioned between the heating assembly 150a and the film 20. Although this particular embodiment employs a set of three heating elements 160 and a plurality of channel blockers 170, any number of heating elements and any number of channel blockers can be used, depending on the design considerations of the system. For example, a system having a single heating element (heating assembly 150b) is shown in Figure 2b, while a system having five heating elements (heating assembly 150c) is shown in Figure 2c. Another example may include a set of 10 heating elements and a set of 50 channel blockers. Each transverse heating element can be a single heater spanning the entire width of the film area to be controlled, or a plurality of smaller heaters, including point sources of heat, arranged to provide the desired amount of heat to the film area to be controlled. Combinations of point sources and extended sources of heat are also contemplated.

To allow for fine control of the cross-web caliper profile of the film, the cross-web heat distribution system of Figure 2a delivers heat to the stretch zone of the film via the heating assembly 150a while providing adjustable profile control of the heat delivered by changing the position of each of the channel blockers 170. In each of Figures 2a-c, the channel blockers 170 preferentially block a desired fraction of the heat at the desired cross-web locations. As a heating element provides heat to the film, a channel blocker or a set of channel blockers can be positioned to effectively cast a shadow on the film, thereby reducing the amount of heat delivered to the film at selected specific location(s). The position of each particular channel blocker casts a shadow at a location corresponding to the area of film to be finely controlled. The degree of resolution can be adjusted by the proximity of the channel blocker to the film as well as the size of the channel blocker. In Figure 2a, the channel blockers 170 are positioned generally horizontally and parallel to the heating elements 160 of the heating assembly 150a. The film in Figure 2a is in an S-wrap configuration. Thus the channel blockers 170 are oblique to the plane of the S-wrap configured film. In Figure 2b, the channel blockers 170 are also positioned generally horizontally but the film is in a tabletop configuration, so that the channel blockers are parallel to the plane of the film. In Figure 2c, the channel blockers are angled to be parallel to the plane of the film, which is in an S-wrap configuration.

The width of each individual channel blocker can be made as narrow as desired and the distance of the blockers to the film can also be tailored. For example, channel blockers can be 10 mm wide, and positioned within 50 mm of the film. Thus, the assembly of channel blockers as the controlling elements can be finely divided, and the cross-web caliper controlling scale can be tailored as desired, providing excellent caliper control. Additionally, since the control location is at the length orientation station where the web is speeding up to the line speed, the lag time from the channel blockers to the winder is substantially shorter than from the die to the winder. Thus, the response time for the control is shorter, making it faster to attain the final caliper uniformity. Moreover, the length-orientation station is usually in an open space and easily accessible, making the system easy to install and implement. The channel blocker embodiment can also be used in a tenter oven. In such a system, the distance between the winder and the tenter oven may be even shorter, and the response time may be even faster. Access to the heating assembly with the channel blockers can be designed to be controllable from outside the tenter oven.

The systems and methods of Figures 2a-c allow the amount of heat delivered to a particular area to be changed rapidly. As discussed further below, alternative cross-web heat distribution systems can be used in which the cross-web heat distribution profile is changed by changing the electrical power provided to an array of heaters. Alternative systems may have certain benefits, such as no moving parts, but may also have disadvantages depending on the types of heaters used, such as lower spatial resolution and slower response times. For example, some industrial-grade IR heaters can take as long as five minutes to warm up and as long as fifteen minutes to cool down. In contrast, systems employing moveable channel blockers can be designed to have relatively fast response times and high spatial resolution. Movement of a channel blocker or a set of channel blockers to cast a shadow on the film thereby reducing the amount of heat delivered to the film is much faster than the response time of conventional IR heaters. The response time of systems using channel blockers is limited only by how fast a channel blocker can be moved and the time it takes the web to respond. This will depend on the particular mechanical design of the channel blocker assembly and its control mechanism. Those skilled in the art will appreciate the variety of possible designs suitable for mechanical control of the channel blocker assembly.

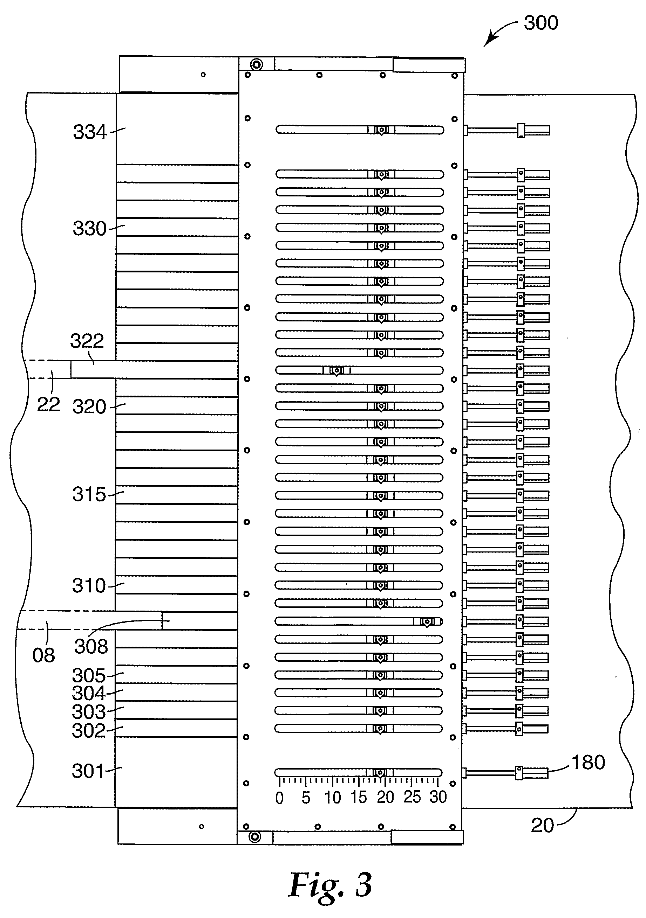

Figure 3 shows a top view of one exemplary design of a channel blocker assembly 300. Assembly 300 has 34 channel blockers positioned adjacent to each other, the set spanning the entire width of film to be controlled. The physical dimensions of the film may, if desired, extend beyond the width of film to be controlled, for example where the outside edges of film are cut away and discarded or recycled, leaving a useable central film portion. A cross-web heat distribution system incorporating a channel blocker assembly such as the one depicted in Figure 3 can be used in the length orienter, the tenter, or both.

A feedback mechanism can be used to iteratively measure the physical or optical caliper profile, optionally map the measured caliper profile to the stretch zone, and adjust the cross-web heat distribution system in response to the measured or mapped profile. Feedback mechanisms are known and will not be described in detail. Briefly, a feedback mechanism can be in the form of manual control by an operator, it can be computer controlled, or it can be a combination of computer and manual control. For example, one such feedback mechanism can be a computer controlled system with manual override. Preferably, the feedback mechanism employs a computer controlled mapping algorithm, using any of the mapping methods described herein. A manual mapping algorithm can also be used.

In some embodiments, the cross-web heat distribution system comprises a set of repositionable heating elements arranged along the transverse direction in the orienter. In the exemplary embodiment discussed below, such a cross-web heat distribution system is used in the tenter. The deformation zone of the tenter can be a purely transverse stretch zone, a relaxation zone, a machine direction stretch zone, or a biaxial stretch zone. Such a cross-web heat distribution system comprising repositionable heating elements can also be used in the length orienter.

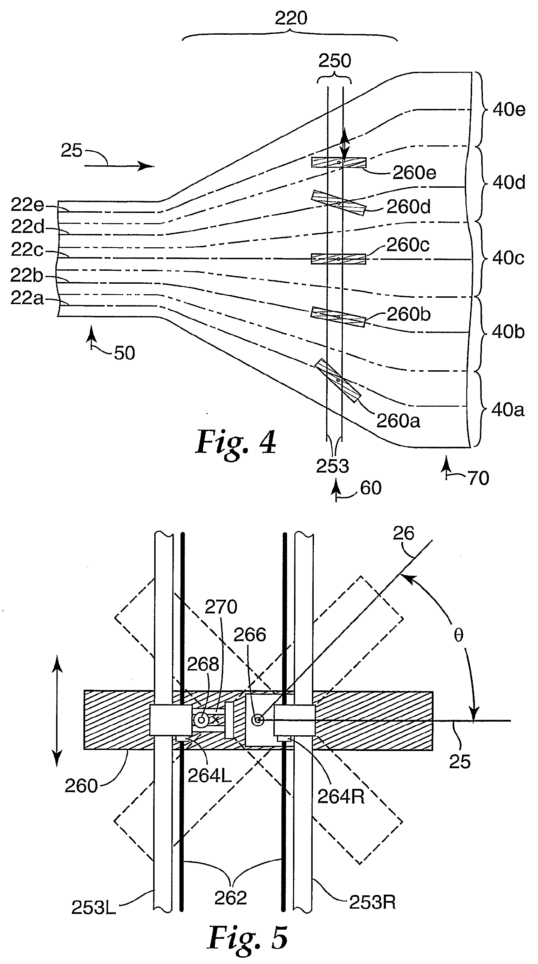

Figure 4 schematically illustrates one implementation of this embodiment. In Figure 4, the film is being stretched in the transverse direction in a tenter oven 200 (see Figure 1). In this particular implementation, the repositionable heating elements are also pivotable. The cross-web heat distribution system 250 comprises five repositionable rod heaters 260a-e mounted on a pair of mounting channels 253. Other implementations are also possible, including but not limited to an array of smaller heat sources arranged linearly or in any other shape optimized for a particular desired response.

Although in the embodiment of Figure 4, the heaters are located in a stretch zone of an orienter, their location is not limited to a stretch zone. Orienters may have additional zones or other defomation zones where the cross-web heat distribution system may be used. Additional zones include but are not limited to preheat zones, annealing zones, and heat set zones. When used in a length orienter, the stretch zone is a longitudinal stretch zone. When used in a tenter, the deformation zone can be a transverse stretch zone, a relaxation zone, a machine direction stretch zone, or a biaxial stretch zone. The cross-web heat distribution systems can be located in or near any of these zones. Although most of the embodiments disclosed herein refer to a stretch zone, it is intended that the cross-web heat distribution system can also reside in or near other zones. In this application, the location where the cross-web heat distribution system resides in any embodiment will be referred to as a heat distribution zone.

In the heat distribution system 250 of Figure 4, the heating elements are repositionable in two ways. First, the heating elements are able to move transversely along the mounting channels to any location along the width of the film. Second, the heating elements are also pivotable. The benefits of pivoting heaters will be discussed below. Other implementations and embodiments are also contemplated. For example, the heating elements can be repositionable so that they can move toward and away from the film, in a plane perpendicular to the plane of the film.

In order to map a transverse location on any portion of the film as it moves along the film line, imaginary center lines 22a-e are shown for each lane 40a-e respectively in Figure 4. Film lanes 40a-e are bounded by phantom lines. In Figure 4, each of the center lines 22a-e also represents the travel direction of each corresponding lane of film as the film is stretched. During transverse stretching, the distance between each pair of phantom lines increases proportionally to the amount of transverse stretch. In other words, the width of each film lane increases as the film is transversely stretched. Ideally, for example, if a film is stretched at a ratio of 3:1, the width of each film lane would increase three-fold when measured at a point just before the stretch zone 220 and just after the stretch zone 220. In practice, however, a variety of factors can cause the film lanes not to be equal in width. These factors can include, for example, variations in cross-web uniformity before stretching, variations in cross-web temperature distribution in the tenter, variations in the homogeneity of the extruded mixture, and edge effects in a film web of finite width.

The rod heaters 260a-e of the cross-web heat distribution system are mounted such that the heaters can be positioned independently of each other. Optionally, in addition to moving transversely, each rod heater can also be mounted so that it can pivot. Pivotable heaters have two advantages. First, a pivoting rod heater can be aligned with the travel direction of the particular lane of film over which it is positioned. Second, a pivoting rod heater can be angled with respect to the travel direction of the film lane to provide a wider heat distribution profile from any single heating rod. This widening effect on the heat distribution profile will be discussed in more detail in the examples that follow. Pivoting, repositionable heating elements provide greater control of the heat delivered to the film, in turn providing a more finely adjustable heat distribution profile compared to known systems.

In Figure 4, each of the heating elements 260a-e is mounted with pivots on two parallel channels 253 across the tenter. This way the cross-web location of each heater can be precisely adjustable from outside the tenter oven. The position and orientation of each rod heater 260a-e can be controlled by a variety of methods known in the art. In the embodiments of Figures 5-6, the position and orientation are controlled using a pair of Acme brand threaded rods 262 for each rod heater. Other methods for position and pivot control can also be used, e.g. connecting a pair of cables to each rod heater.

Figure 5 shows a close up of a single repositionable heating element of heat distribution system 250. The heating element 260 can be positioned at any location along the two mounting channels 253L and 253R. Optionally, the heating element 260 can also be rotated, as shown by the dashed lines, to be aligned with line 26 so that it forms an angle θ with respect to the machine direction 25. In one embodiment, the rotation is achieved by having one stationary bolt 266 and one bolt 268 that is allowed to move along a sliding channel 270 as the heating element 260 rotates. The stationary bolt 266 serves as the pivot point of the heating element, and in this embodiment is located in the center of the heating element 260. When pivoting is not desired, the sliding channel 270 can be eliminated and both bolts can be stationary. Other arrangements are also contemplated.

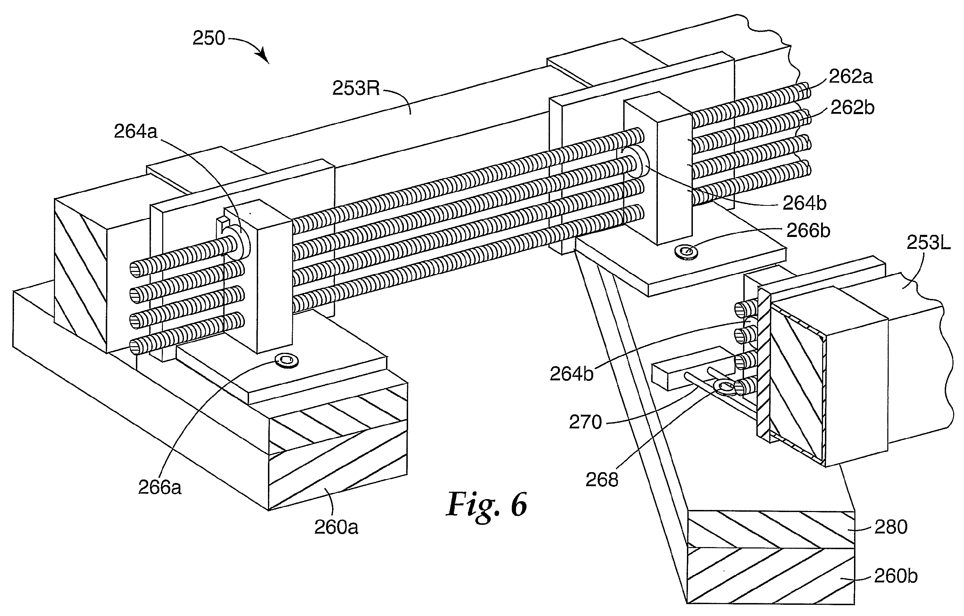

Figure 6 shows a perspective partial view of the heat distribution system 250 of Figure 4. Figure 6 shows two heating elements 260a and 260b mounted on channels 253L and 253R. The position of heating element 260a is controlled by a pair of threaded rods 262a. Similarly, the position of heating element 260b is controlled by a pair of threaded rods 262b. The optional rotation of heating element 260b is accomplished by positioning a nut 264b on the stationary (253R) side at one location along the threaded rod 262b on channel 253R, while positioning the corresponding nut 264b at a different location along the corresponding threaded rod mounted on channel 253L. This can also be seen in Figure 5. The cross-web location of each heater 260 can be precisely adjustable from outside the tenter oven with a pair of screws (not shown) connected to each pair of threaded rods. Additionally the angle of orientation of the heater can also be precisely adjusted from outside the tenter oven by the relative position of the pivot points 266b and 268 controlled by the screw pair.

A single rod heater that is mounted to be movable in the transverse direction and optionally pivotable with respect to the machine direction can provide adjustable heat profile control of the film as it is stretched or deformed. When used in combination, an assembly of heaters, such as for example heaters 260a-e, together can provide an adjustable profile of heat across any selected portion of the film or across the entire width of the film.

As in the channel blocker embodiment, this embodiment also has the benefits of fast response time, and fine, active control of the heat distribution. When the control location is a length orientation station at which the web is speeding up to the line speed, the lag time from the cross-web heat distribution system to the winder is substantially shorter than from the die to the winder. Thus, the response time for the control is short, resulting in short cycle time, making it much faster to attain the desired final caliper uniformity. Again, the length-orientation station is often in an open space and easily accessible, making installation of a cross-web heat distribution system convenient. When the control location is in the tenter, the cycle time and response time can be even shorter.

Generally, the caliper profile of the film can be measured at any point downstream from the location of the cross-web heat distribution system. For example, in a system employing any of the disclosed cross-web heat distribution systems in a length orienter, the cross-web caliper profile can be measured downstream from the length orienter. In a system employing a cross-web heat distribution system in the tenter oven the cross-web caliper profile can be measured downstream from the tenter oven. Alternatively, the cross-web caliper profile can also be measured inside the tenter oven just after the deformation zone if that is where the cross-web heat distribution system resides. In systems employing a cross-web heat distribution system in a length orienter, but also employing a tenter for subsequent transverse stretching, the cross-web caliper profile measurement can be done downstream of the length orienter but upstream of the tenter oven. Applicants have found, however, that controlling the cross-web heat distribution in the length orienter, followed by deformation in a tenter, followed by a measurement of the cross-web caliper profile of the film downstream from the deformation zone, provides unexpected results. Example 2 below describes one such system and method.

For optical films, overall film optical caliper can be detected and monitored via the optical transmission or reflectance spectra using optical caliper measurement gauges. For example, an on-line spectrophotometer can be set up to measure the spectral transmission of the film as it comes off the line, thereby providing the necessary information to measure cross-web caliper profile uniformity and provide feedback for process controls. An example of one such spectrophotometer is a Type U-4000 spectrophotometer made by Hitachi Ltd. In some cases, the wavelength at which the transmission spectrum drops off to a specific level can be used as a measure of its optical caliper. In other cases, the transmittance at a specific wavelength can be used as a measure of its optical caliper. Other methods are possible including indirect methods which can be calibrated using the direct methods described above.

Caliper gauges can measure physical thickness of the film, optical thickness of the film or other thickness related properties of the film as described above. In this application, cross-web caliper refers to optical caliper, physical caliper, a combination of the two, or any other thickness related property as required by the specific product design. Those skilled in the art of optical films or high performance films will be able to design the appropriate caliper for the specific product. For example, measurement of the physical caliper of a film can be done using online traversing beta gauge scanning devices, such as a Measurex™ scanner, commercially available from Honeywell International, Inc., Morristown, New Jersey, USA. Other caliper gauges include without limitation beta transmission gauges, X-ray transmission gauges, gamma backscatter gauges, contact caliper sensors, and laser caliper sensors. Such gauges are commercially available, for example from NDC Infrared Engineering, Irwindale, California, USA.

The measured film caliper profile is optionally mapped to the corresponding film location where the cross-web heat distribution system resides. For some embodiments, a film caliper profile measured after the transverse stretch zone can be mapped to the film in the longitudinal stretch zone of the length orienter. For other embodiments, the film caliper profile is measured downstream from the heat distribution system and is mapped to the heat distribution zone. Mapping can be done in a number of ways. A simple mapping method includes dividing the width of film into a set of imaginary film lanes as shown, for example, by the phantom lines in Figure 3 and Figure 4. In Figure 3, the film is divided into 34 film lanes, each lane corresponding to one channel blocker. In this particular embodiment, channel blockers 301 and 334 are wider than the remaining channel blockers 302-333. Thus the corresponding lanes 1 and 34 are wider than lanes 2-33. In Figure 4, five film lanes 40a-e are indicated by phantom lines. The center of each of the five lanes 40a-e is shown by center lines 22a-e, respectively.

The cross-web caliper profile is measured downstream from the heat distribution zone where the cross-web heat distribution system resides. At the measurement location the film may not be the same width as the width of the film at the location of the heat distribution system where the control is taking place. Thus a mapping algorithm is used to map one location to the other. A mapping algorithm essentially translates each cross-web position of the film at one location into a corresponding cross-web position on the film at another location. A mapping algorithm can take into account any or all of the factors that may affect how the film width differs between two locations, including without limitation stretching, contracting, bowing, whether the edges of the film at one location have been cut away, variations in cross-web uniformity before stretching, variations in cross-web temperature distribution in the tenter, or variations in the homogeneity of the extruded mixture.

Additional mapping methods can include physically marking the film with an indicator before stretching and measuring the location of the indicator after stretching. For example, a first method can include drawing two lines 50 mm from each edge of the film, then measuring the location of those lines after stretching and subdividing the width of film between the two lines into a number of lanes having equal width. This method assumes that each lane is stretched or deformed by the same amount. A second method may include drawing 50 indicator lines on the film, then stretching the film and measuring the location of each indicator line after stretching. A third method may include selectively moving one or more of the channel blockers or repositionable heaters and measuring the effect on the stretched film. This method is referred to as active mapping or mapping by bumping. A fourth method may use conservation of mass principles, wherein the cross-web caliper profile of the film is measured before and after stretching. Since mass is conserved during stretching, the volume of film also remains the same and the width of a given number of film lanes can be calculated from the two measured caliper profiles. Any of these mapping methods can be used to design an appropriate mapping algorithm.

For example, in Figure 4 a film is transversely stretched in a system using a cross-web heat distribution system 250 positioned at the longitudinal location 60. In some embodiments, the cross-web caliper profile is measured at longitudinal location 70, where the film is wider than the film at location 60. To control the heat distribution at location 60, the measured profile at location 70 is mapped to the location of the heat distribution system 60. The heat distribution system can then be adjusted to smooth out any thick or thin spots or irregularities in the film profile. In another example, such a system can also be equipped with a second cross-web heat distribution system at location 50. In that case, the cross-web caliper profile measured at location 70 can also be mapped to location 50, where the second heat distribution system resides.

Useable cross-web heat distribution systems can be any of the systems disclosed above, e.g. systems using repositionable heating elements, heating elements with channel blockers, or a combination of the two. Any other known or later-developed cross-web heat distribution system capable of delivering heat to the web according to a tailorable cross-web profile can also be used. Cross-web heat distribution systems can be used in a length orienter or in a tenter. When used in the tenter, the selectable distribution of heat is provided to the deformation zone of the film. When used in the length orienter, the selectable distribution of heat is provided to the longitudinal stretch zone of the film.

As will be described in Example 1 below, if the measured film profile has a thick or high spot mapped to lane 08, then the corresponding channel blocker 308 can be adjusted so that more heat is delivered to lane 08. This allows the film to stretch more in that lane, thereby reducing or eliminating the thick spot in the finished film. Similarly, if the measured film profile indicates a low spot on the film at a location corresponding to lane 22, channel blocker 322 can be moved to block the heat from reaching the film at that location, as shown for example in Figure 3. In one embodiment, the extent of blocking or unblocking is adjusted by the advancement of a channel via a threaded rod rotated with a shaft 180. It is evident that such adjustment can be made infinitesimally fine, rendering excellent control of the heat distribution.

Similarly, as shown in Examples 3 and 4, thick spots can also be adjusted using repositionable heating elements in either the length orienter or the tenter. The effects can be even more finely adjusted if the repositionable heating elements are also allowed to pivot. As in the channel blocker embodiments, the repositionable heaters can be used to actively control the cross-web caliper of a film to a desired final profile.

In some embodiments, the length-oriented film can be subsequently deformed in the tenter. In such cases, it is counter-intuitive that adjusting the cross-web heat distribution at the length orientation station, rather than the tenter, would be effective in correcting the cross-web caliper profile in the finished film downstream of the tenter. Example 2 below surprisingly demonstrates that the cross-web caliper can be finely adjusted by selectively blocking portions of the heat delivered to the film during longitudinal stretch thus providing more uniform biaxially stretched films. Although Example 2 uses the channel blocker heat distribution system, this method can also be used with any other cross-web heat distribution system, such as the repositionable heating elements disclosed herein, or other cross-web heat distribution systems known in the art. This method's unique approach of controlling the heat distribution in the length orienter during longitudinal stretch to achieve a uniform cross-web caliper of a film that has subsequently been deformed in the tenter can provide exceptionally good results.

### Examples

### Example 1.

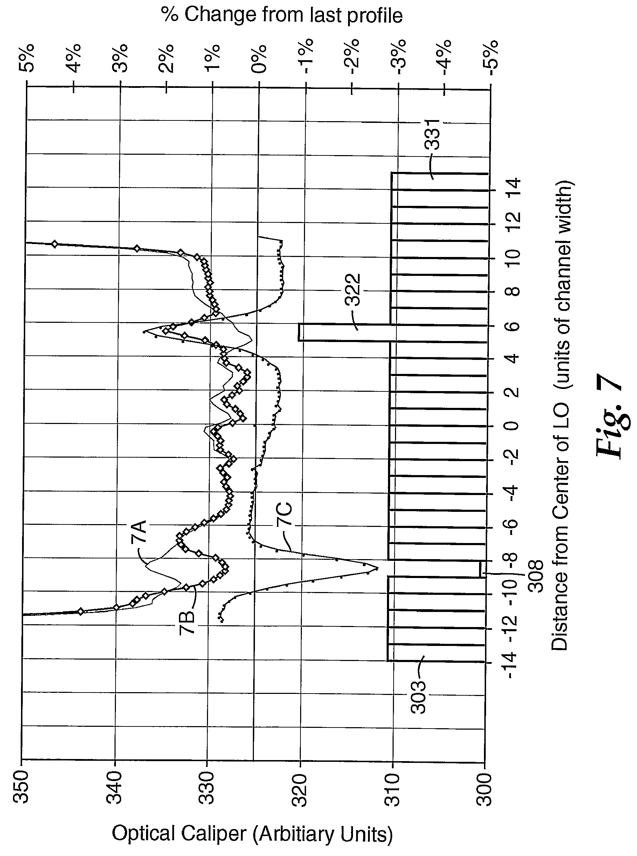

In the example shown in Figure 7, an IR reflecting multilayer optical film was made by extruding alternating layers of polymethyl methacrylate (PMMA) and a copolymer of polyethylene naphthalate (co-PEN). The film was first length oriented at a stretch ratio of 3.3:1 and then subsequently width oriented in the tenter, at a stretch ratio of 3.3:1. The optical caliper of the film was measured after the tenter using an optical caliper gauge. Curve 7A shows the initial mapped optical caliper profile of the film. To control the caliper profile, a heating assembly having three IR rod heaters and a set of 34 channel blockers was used in the length orienter. The IR rod heaters used were Model 5305 series Parabolic Strip Heaters, made by Research, Inc., Minneapolis, Minnesota, USA. Channel blockers 303-331 are shown at the bottom of the graph. The channel width is 12.7 mm. To lower the peak, indicating a thick spot, shown in curve 7A at the location corresponding to channel 308, channel blocker 308 was moved down 25.4 mm from a starting position of 35.6 mm to a final position of 10.2 mm. Moving this channel blocker down allowed more heat to reach the film at that cross-web location. More heat delivered to this location lowered the peak by allowing that portion of the film to stretch more. The resulting mapped caliper profile is shown in curve 7B at the location corresponding to channel blocker 308. Curve 7C shows the percent change from the starting caliper profile of curve 7A to final caliper profile of curve 7B. At the location corresponding to channel blocker 308, curve 7C shows that moving channel blocker 308 by -25.4 mm changed the caliper profile by approximately -3%. Similarly, the channel blocking effect is shown in curves 7A-C at the location corresponding to channel blocker 322. The starting caliper profile has a dip indicating a thin spot at this location, as shown in curve 7A. By moving channel blocker 322 up 25.4 mm to a final position of 61 mm, more heat was blocked from reaching that portion of the film allowing the film to stretch less than the neighboring portions. This resulted in an increased caliper profile at that location as shown in curve 7B. The percent change at this location changed by approximately 3% as shown in curve 7C.

### Example 2.

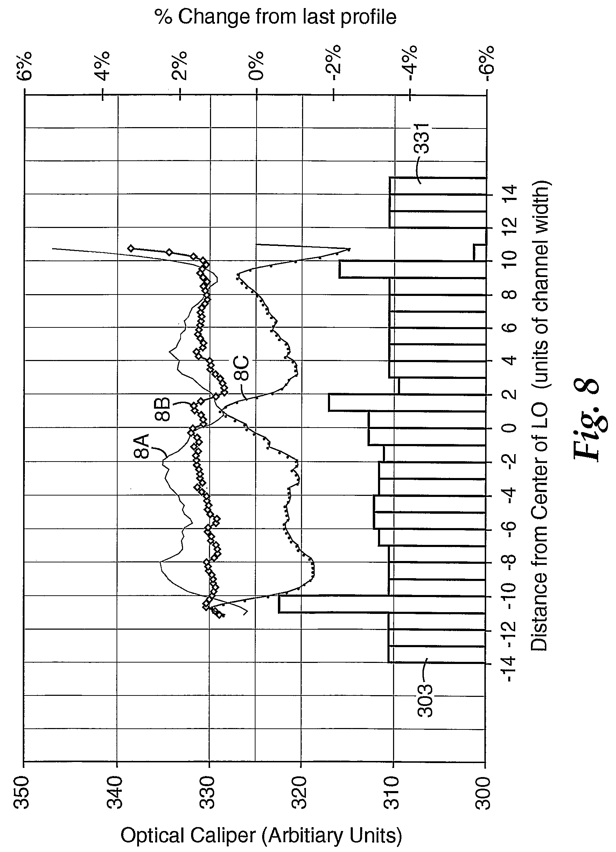

In the example shown in Figure 8, an IR reflecting multilayer optical film was made by extruding alternating layers of polymethyl methacrylate (PMMA) and a copolymer of polyethylene naphthalate (co-PEN). The film was length oriented at a stretch ratio of 3.3:1. The film was subsequently stretched in the cross-direction in the tenter, at a stretch ratio of 3.3:1. The optical caliper of the film was measured after the tenter using an optical caliper gauge. Curve 8A shows the original cross-web optical caliper profile of the film mapped onto the length orientation station. To control the caliper profile, a heating assembly having three IR rod heaters and a set of 34 channel blockers was used in the length orienter. The IR rod heaters used were Model 5305 series Parabolic Strip Heaters, made by Research, Inc., Minneapolis, Minnesota, USA. Channel blockers 303-331 are shown at the bottom of the graph. The channel width was 12.7 mm.

The profile of the film shown in curve 8A was adjusted by moving several of the channel blockers, as indicated by the final setting of each of the channel blocker at the bottom of Figure 8. Table 1 shows the initial and final settings for channel blockers 303-331. The resulting optical caliper profile is shown in curve 8B. Curve 8C shows the percent change between the final and initial caliper profiles. Curve 8B demonstrates that the initial film profile shown in curve 8A can be adjusted to be more uniform using the cross-web heat distribution system having a set of IR heaters and a set of channel blockers.

**Table 1.**

| **Channel No.** | **Initial Channel Blocker Setting (mm)** | **Final Channel Blocker Setting (mm)** |
|---|---|---|
| 303 | 36 | 36 |
| 304 | 36 | 36 |
| 305 | 36 | 36 |
| 306 | 36 | 66 |
| 307 | 36 | 36 |
| 308 | 36 | 36 |
| 309 | 36 | 36 |
| 310 | 36 | 38 |
| 311 | 36 | 39 |
| 312 | 36 | 39 |
| 313 | 36 | 38 |
| 314 | 36 | 38 |
| 315 | 36 | 37 |
| 316 | 36 | 41 |
| 317 | 36 | 41 |
| 318 | 36 | 51 |
| 319 | 36 | 33 |
| 320 | 36 | 36 |
| 321 | 36 | 36 |
| 322 | 36 | 36 |
| 323 | 36 | 36 |
| 324 | 36 | 36 |
| 325 | 36 | 36 |
| 326 | 36 | 48 |
| 227 | 36 | 14 |
| 328 | 36 | 0 |
| 329 | 36 | 36 |
| 330 | 36 | 36 |
| 331 | 36 | 36 |

### Example 3.

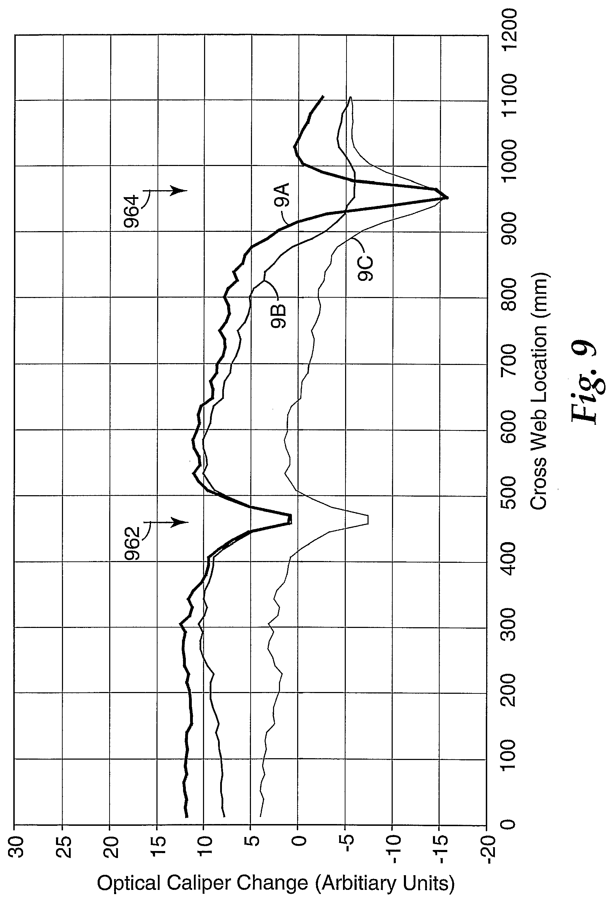

In the example shown in Figure 9, a multilayer optical film was made by extruding alternating layers of polyeylene terephthalate (PET) and a copolymer of PMMA. The film was length oriented at a stretch ratio of 3.35:1. The film was subsequently oriented in the transverse direction at a stretch ratio of 3.3:1 in a tenter. The tenter was equipped with a set of repositionable, pivoting heating elements in the transverse stretch zone of the tenter. Each heating element was 325 mm long, 10 mm wide, with a parabolic reflector 80 mm wide. The heating elements used were Raymax Model 1525 available from Watlow Electric, St. Louis, Missouri, USA. The center of the heating element was used as the pivot point and the position location in this example. The optical caliper of the film was measured after the tenter using an optical caliper gauge. Curves 9A, 9B, and 9C show optical caliper change as a function of cross-web location for different configurations of the cross-web heat distribution system, demonstrating the effect of the repositionable, pivoting IR heaters on the finished film. Heating element power and angles of orientation are listed in Tables 2 and 3.

**Table 2: Heater 962 Settings**

| **Curve** | **9A** | **9B** | **9C** |
|---|---|---|---|
| Power (%) | 15 | 15 | 15 |
| Angle (°) | 0 | 0 | 0 |

**Table 3: Heater 964 Settings**

| **Curve** | **9A** | **9B** | **9C** |
|---|---|---|---|
| Power (%) | 20 | 20 | 20 |
| Angle (°) | 0 | 12.5 | 25 |

When a single heating element is kept at constant power and at the same angle of orientation, the change in cross-web optical caliper profile remains the same for each of the three curves 9A, 9B, and 9C. This effect is observed as the dips in curves 9A, 9B, and 9C at cross-web location of 460 mm corresponding to a first heating element 962. When a single heating element is kept at constant power, but the angle of orientation is changed, a broadening effect is observed. The dips in curves 9A, 9B, and 9C at 950 mm demonstrate this broadening effect due to a single rod heater. In this example, a second heater 964 located at 950 mm was rotated from 0 degrees in curve 9A to 12.5 degrees in curve B, to 25 degrees in curve C.

### Example 4.

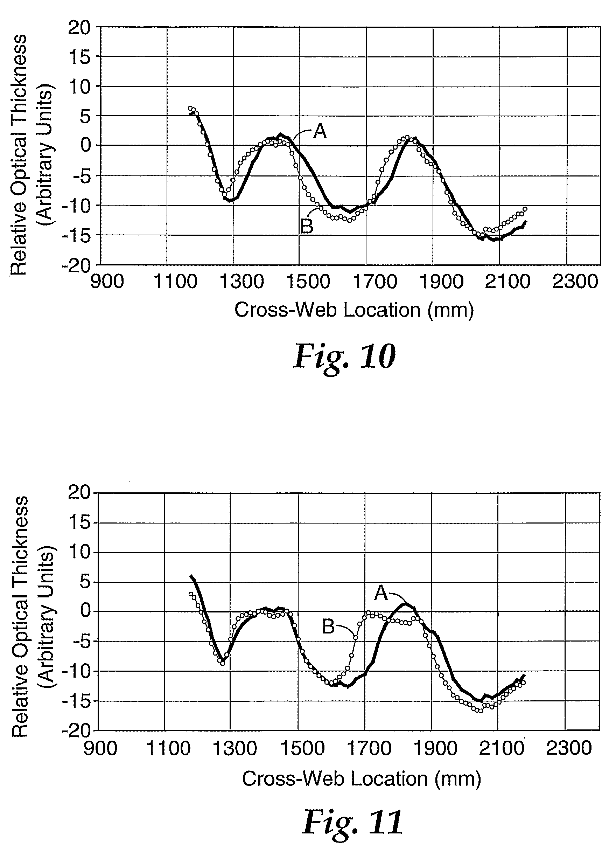

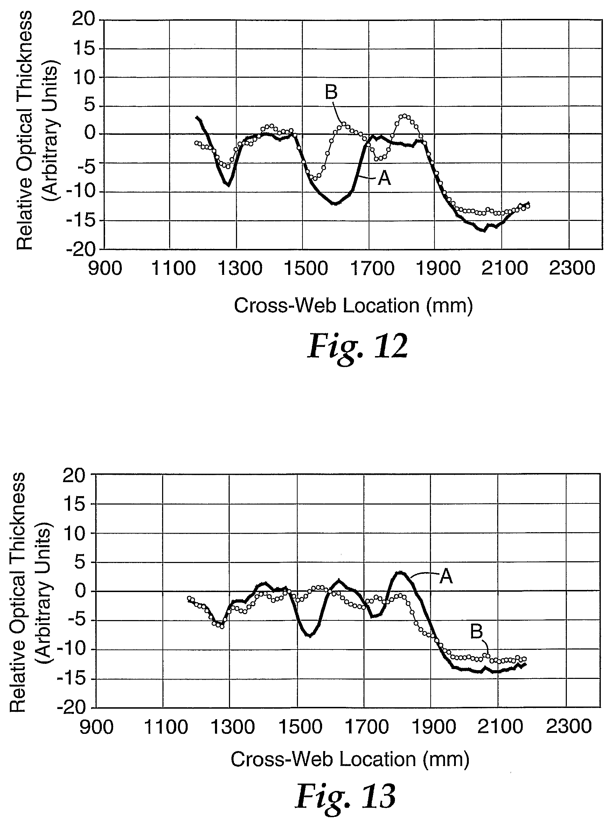

In the example shown in Figures 10-13, a multilayer optical film was made by extruding alternating layers of PET and a copolymer of PMMA. The film was length oriented at a stretch ratio of 3.35:1. The film was subsequently oriented in the transverse direction at a stretch ratio of 3.3:1. The tenter was equipped with a set of four repositionable, pivoting heating elements in the transverse stretch zone. Each heating element was 325 mm long, 10 mm wide, with a parabolic reflector 80 mm wide. The heating elements used were Raymax Model 1525 available from Watlow Electric, St. Louis, Missouri, USA. The center of each heating element was used as the pivot point. The position of the center of each heating element in this example is shown as "Position, Right" and the position of the movable bolt for pivoting is shown as "Position, Left-Tilt" in Tables 4-7. The optical caliper of the film was measured downstream of the tenter using an optical caliper gauge. Curves A in each of Figures 10-13 show the initial optical cross-web caliper profile. Figures 10-13 represent successive iterations of changing the heater settings. Initially, the cross-web optical caliper profile of the film was measured. The measured data points are plotted as curve A of Figure 10. Next, the measured cross-web optical caliper profile of the film was mapped onto the transverse stretch zone. In response to the mapped profile, heaters 1-4 were set in a first iteration according to the parameters shown in Table 4. The resulting cross-web optical caliper profile was measured and is shown as curve B of Figure 10. The resulting optical caliper of the first iteration (curve B of Figure 10) then becomes the initial caliper profile of the second iteration (curve A of Figure 11). The steps of measuring the optical caliper profile, mapping the measured optical caliper profile onto the stretch zone, and adjusting the cross-web heat distribution system in response to the mapped profile form a feedback loop, which is repeated until a desired final caliper profile is reached. In the second iteration, heaters 1-4 are set according to the parameters listed in Table 5. The resulting optical caliper profile is plotted as curve B of Figure 11. This process is repeated through two more iterations as shown by the heater settings in Tables 6 and 7 and the caliper profiles are plotted in Figures 12 and 13. The concerted effect of a set of four repositionable, pivoting IR heaters on the optical cross-web caliper profile of the finished film is illustrated by curve B of Figure 13. Curve B of Figure 13, in the range of approximately 1300 - 1850 mm, shows that a flat final caliper profile can be obtained using a set of four repositionable heating elements located in this regime of interest. Note that the "valley" at cross-web locations beyond 1850mm can be dealt with by other means, such as a die bolt adjustment.

**Table 4. Heater Settings for Figure 10**

| **Heater** | **1** | **2** | **3** | **4** |
|---|---|---|---|---|
| Power (%) | 0 | 80 | 80 | 0 |
| Angle (°) | 0 | +36 | +36 | 0 |
| Position, Left-Tilt (m) | 1.156 | 1.365 | 1.797 | 2.159 |
| Position, Right (m) | 1.156 | 1.397 | 1.829 | 2.159 |

**Table 5. Heater Settings for Figure 11**

| **Heater** | **1** | **2** | **3** | **4** |
|---|---|---|---|---|
| Power (%) | 0 | 100 | 100 | 0 |
| Angle (°) | 0 | +36 | +36 | 0 |
| Position, Left-Tilt (m) | 1.156 | 1.365 | 1.734 | 2.159 |
| Position, Right (m) | 1.156 | 1.397 | 1.765 | 2.159 |

**Table 6. Heater Settings for Figure 12**

| **Heater** | **1** | **2** | **3** | **4** |
|---|---|---|---|---|
| Power (%) | 50 | 100 | 100 | 50 |
| Angle (°) | +36 | +36 | +36 | +36 |
| Position, Left-Tilt (m) | 1.238 | 1.365 | 1.645 | 1.772 |
| Position, Right (m) | 1.270 | 1.397 | 1.676 | 1.803 |

**Table 7. Heater Settings for Figure 13**

| **Heater** | **1** | **2** | **3** | **4** |
|---|---|---|---|---|
| Power (%) | 50 | 100 | 80 | 50 |
| Angle (°) | +36 | +36 | +36 | +36 |
| Position, Left-Tilt (m) | 1.238 | 1.365 | 1.594 | 1.772 |
| Position, Right (m) | 1.270 | 1.397 | 1.626 | 1.803 |

While the invention is amenable to various modifications and alternative forms, specifics thereof have been shown by way of example in the drawings and the detailed description. It should be understood, however, that the intention is not to limit the invention to the particular embodiments described.

## Claims

1. A method of controlling a cross-web caliper profile of a biaxially oriented polymeric film (20), comprising the steps of:
a) stretching the film (20) in a length orienter (100) having an adjustable profile cross-web heat distribution system (150a; 150b; 150c) delivering heat to the film (20) as it is being stretched in a stretch zone (140; 140b) of the length orienter (100);
b) subsequently deforming the film (20) in a tenter (200) having a deformation zone;
c) measuring the cross-web caliper profile of the film (20) at a location downstream from the deformation zone ; and
d) adjusting the cross-web heat distribution system in response to the measured crossweb caliper profile.

2. The method of claim 1, wherein the deformation zone is a transverse stretch zone (220).

3. The method of claim I, wherein the deformation zone is a relaxation zone.

4. The method of claim 1, wherein the deformation zone is a machine direction stretch zone.

5. The method of claim 1, wherein the adjusting step includes mapping the measured cross-web caliper profile of the film onto the length orienter (100).

6. The method of claim 1, wherein the adjusting step includes selectively positioning at least one channel blocker (170; 303 - 331) to control heat distribution.

7. The method of claim 1, wherein the adjusting step includes selectively controlling the power of at least one heating element (160; 260; 260a, 260b).

8. The method of claim 1, wherein the adjusting step includes selectively positioning at least one repositionable heating element (260; 260a, 260b) to control heat distribution.

9. The method of claim 8, wherein the adjusting step includes selectively positioning at least one pivotable heating element (260; 260a, 260b).

10. The method of claim 1 or 5, further comprising iteratively repeating steps c and d.

11. The method of claim 1, further comprising a step of stretching the film in an additional length orienter after the step of deforming the film in the tenter (200).

## Patentansprüche

1. Verfahren zum Steuern eines Bahnquerdickenprofils einer biaxial orientierten polymeren Folie (20), umfassend die Schritte des:
a) Streckens der Folie (20) in einem Längenorientierer (100), der ein einstellbares Bahnquerprofil-Wärmeverteilungssystem (150a; 150b; 150c) aufweist, das der Folie (20) während des Gestrecktwerdens in einer Streckzone (140; 140b) des Längenorientierers (100) Wärme zuführt;
b) nachfolgenden Verformens der Folie (20) in einem Spannrahmen (200), der eine Verformungszone aufweist;
c) Messens des Bahnquerdickenprofils der Folie (20) an einer der Verformungs-zone nachgelagerten Stelle; und
d) Anpassens des Bahnquer-Wärmeverteilungssystems in Reaktion auf das gemessene Bahnquerdickenprofil.

2. Verfahren nach Anspruch 1, wobei die Verformungszone eine Querstreckzo-ne (220) ist.

3. Verfahren nach Anspruch 1, wobei die Verformungszone eine Relaxationszone ist.

4. Verfahren nach Anspruch 1, wobei die Verformungszone eine Streckzone in Maschinenlaufrichtung ist.

5. Verfahren nach Anspruch 1, wobei der Anpassungsschritt das Abbilden des gemessenen Bahnquerdickenprofils der Folie auf den Längenorientierer (100) einschließt.

6. Verfahren nach Anspruch 1, wobei der Anpassungsschritt das selektive Positionieren mindestens eines Kanalblockers (170; 303 - 331) zum Steuern der Wärmeverteilung einschließt.

7. Verfahren nach Anspruch 1, wobei der Anpassungsschritt das selektive Steuern der Leistung von mindestens einem Heizelement (160; 260; 260a, 260b) einschließt.

8. Verfahren nach Anspruch 1, wobei der Anpassungsschritt das selektive Positionieren mindestens eines repositionierbaren Heizelements (260; 260a, 260b) zum Steuern der Wärmeverteilung einschließt.

9. Verfahren nach Anspruch 8, wobei der Anpassungsschritt das selektive Positionieren mindestens eines schwenkbaren Heizelements (260; 260a, 260b) einschließt.

10. Verfahren nach Anspruch 1 oder 5, ferner umfassend iteratives Wiederholen der Schritte c und d.

11. Verfahren nach Anspruch 1, ferner umfassend einen Schritt des Streckens der Folie in einem zusätzlichen Längenorientierer nach dem Schritt des Verformens der Folie im Spannrahmen (200).

## Revendications

1. Procédé de commande d'un profil transversal d'épaisseur d'un film polymère orienté biaxialement (20), comprenant les étapes consistant à :
a) étirer le film (20) dans un dispositif d'orientation en longueur (100) possédant un système de distribution transversale de chaleur à profil réglable (150a ; 150b ; 150c) délivrant de la chaleur au film (20) à mesure qu'il est étiré dans une zone d'étirement (140 ; 140b) du dispositif d'orientation en longueur (100) ;
b) déformer ultérieurement le film (20) dans un tendeur (200) possédant une zone de déformation ;
c) mesurer le profil transversal d'épaisseur du film (20) à un emplacement en aval de la zone de déformation ; et
d) régler le système de distribution transversale de chaleur en réponse au profil transversal d'épaisseur mesuré.

2. Procédé selon la revendication 1, dans lequel la zone de déformation est une zone d'étirement transversale (220).

3. Procédé selon la revendication 1, dans lequel la zone de déformation est une zone de relaxation.

4. Procédé selon la revendication 1, dans lequel la zone de déformation est une zone d'étirement dans la direction de la machine.

5. Procédé selon la revendication 1, dans lequel l'étape d'ajustement inclut la cartographie du profil transversal d'épaisseur mesuré du film sur le dispositif d'orientation en longueur (100).

6. Procédé selon la revendication 1, dans lequel l'étape d'ajustement inclut le positionnement sélectif d'au moins un bloqueur de canal (170 ; 303 - 331) pour commander la distribution de chaleur.

7. Procédé selon la revendication 1, dans lequel l'étape d'ajustement inclut la commande sélective de la puissance d'au moins un élément chauffant (160 ; 260 ; 260a, 260b).

8. Procédé selon la revendication 1, dans lequel l'étape d'ajustement inclut le positionnement sélectif d'au moins un élément chauffant repositionnable (260 ; 260a, 260b) pour commander la distribution de chaleur.

9. Procédé selon la revendication 8, dans lequel l'étape d'ajustement inclut le positionnement sélectif d'au moins un élément chauffant pivotant (260 ; 260a, 260b).

10. Procédé selon la revendication 1 ou 5, comprenant en outre la répétition itérative des étapes c et d.

11. Procédé selon la revendication 1, comprenant en outre une étape consistant à étirer le film dans un dispositif d'orientation en longueur supplémentaire après l'étape de déformation du film dans le tendeur (200).
